# EUROPEAN PATENT SPECIFICATION

(11) **EP 3 222 411 B1**
(45) Date of publication and mention of the grant of the patent: **19.12.2018**
(21) Application number: 17161927.3
(22) Date of filing: 20.03.2017
(51) Int. Cl.: B29C 64/188, B29C 64/112, B33Y 40/00, B33Y 10/00, B33Y 30/00, B33Y 50/00

(54) **METHOD OF GLOSS CORRECTION IN 3D PRINTING**
VERFAHREN ZUR GLANZKORREKTUR
PROCÉDÉ DE CORRECTION DE BRILLANCE

(30) Priority: 22.03.2016 EP 16161684
(43) Date of publication of application: 27.09.2017
(73) Proprietor: OCE Holding B.V., 5914 CA Venlo (NL)
(72) Inventor: VALADE, Cédric T., 5914 CA Venlo (NL)
(74) Representative: OCE IP Department

(56) References cited:
- WO-A1-00/67981
- US-A1- 2015 352 783

## Description

### BACKGROND OF THE INVENTION

### 1. Field of the invention

The invention relates to a method of gloss correction in a process of printing a three-dimensional object, wherein a print head is moved in a main scanning direction x and a sub-scanning direction y relative to a print substrate.

### 2. Description of the Related Art

Three-dimensional objects, including reliefs, may be printed for example with an ink jet printer in which droplets of curable ink are expelled onto the print substrate in several layers so as to build up the object. A relief is a printed object wherein pixels are characterized by a heigth besides the conventional color channels. This technology may be used for example for printing replica of originals, e.g. paintings or other art work, that have been scanned-in with a 3D-scanner. It turns out however, that the surface gloss of the replica may differ significantly from the gloss of the original object in certain surface areas. This may happen for example when the original has a relatively flat surface region which, however, has a certain roughness on a scale that is too small to be resolved by the 3D-scanner. In the original, the roughness will result in a low gloss of that surface region, whereas, on the printed replica, the corresponding region has a very smooth surface with high gloss, which results in disturbing specular reflections that are not observed on the original object. WO-A-00/67981 discloses the features of the preamble of claim 1.

It is therefore an object of the invention to provide a method that permits to mitigate such gloss deviations. Furthermore, a printer and a software product is claimed as defined in claims 9 and 10 respectively.

### SUMMARY OF THE INVENTION

In order to achieve this object, the method according to the invention is characterized by the steps of:
- providing a height map z(x, y) which defines the object to be printed by assigning to each point in a set of points in a x-y-plane that is spanned by the main scanning direction x and the sub-scanning direction y a height value of a surface of the object;
- deriving, from the height map, a normal map which assigns to each point in the set a normal vector N(x, y) that is normal to the surface of the object at that point;
- segmenting the set of points into at least two regions in which the normal vectors of all points in the region fulfill a predefined similarity criterion that is related to a surface gloss of the object;

- for each region, estimating an expected surface gloss value of the object;
- calculating a gloss correction map on the basis of a difference between the estimated surface gloss values for said at least two regions; and
- while printing the object, applying to the object a surface treatment in accordance with the gloss correction map.

In this method, the segmentation step permits to specify surface regions of the object such that the surface gloss is substantially uniform within each region but differs from region to region. These gloss differences may then be used for selectively applying a surface treatment to at least some of the regions in order to reduce the gloss differences.

More specific optional features of the invention are indicated in the dependent claims.

In one embodiment, a similarity criterion that specifies a glossy region may be that the difference between two normal vectors assigned to any two points within that region is, in absolute value, smaller than a certain threshold. When this criterion is fulfilled, all the normal vectors will point essentially in the same direction. Consequently, when light from a remote light source is incident on that region, the light will be reflected essentially in the same direction at any point within the region, so that a specular reflection is observed and the surface region appears glossy.

Another similarity criterion, characterizing a region with low gloss, may be that the normal vectors assigned to the points in that region show large variations even for points that are separated only by a short distance in the x-y-plane.

It is convenient to require that the high-gloss regions should have a certain minimum size in both, the x-direction and the y-direction. Those parts of the set in which the regions with essentially equal normal vectors are smaller than the minimum size may then be considered to be rough and to constitute, jointly, low-gloss region.

A suitable value for the minimum size of the regions may for example be in the order of magnitude of 0.5 mm which is close to the spatial resolution of the naked human eye.

Then, the segmentation will only produce glossy regions which are large enough to be perceived as extended areas to which a gloss value can reasonably be assigned.

Another useful similarity criterion for glossy areas may be that the difference between the normal vectors of two points has to be smaller than a certain threshold only for points that are separated by a distance smaller than a certain limit distance. A substantially equivalent criterion would be that the derivative of the normal vector N(x, y) along any continuous path within the region is smaller, in absolute value, than a certain threshold. These criteria permit that, even within the same glossy region, the difference between the normal vectors of two points may be substantial, provided that these points are separated by a large distance. Then, a smooth but curved surface area of the object may be qualified as glossy even though the normal vectors in two distant parts of this area may point into totally different directions.

Yet another similarity criterion may require that the normal vectors of all points within the region are approximately normal to the x-y-plane, which means that this region is not only smooth and glossy but is essentially horizontal. It may in fact be useful to distinguish between horizontal flat surface regions and other flat surface regions that have a certain inclination. Since the print process consists in applying several layers of ink on the print substrate, horizontal surface regions will normally have a high gloss, whereas the gloss of inclined regions may be lower, because, on a small scale, the height of the surface changes step-wise in increments which correspond to the thickness of an individual ink layer, and these incremental height changes give rise to a certain roughness and hence a lower gloss.

It will be observed that the normal vectors N(x, y) are three-dimensional vectors which have, accordingly, not only an x-component and a y-component but also a z-component. The normal vectors constitute a vector field that may be calculated from the height map by applying a derivation filter such as a Sobel filter, a Scharr filter or the like. The result of the filtering process will however be a two-dimensional vector corresponding to the gradient of the surface that is represented by a height map. This gradient is the projection of the normal vector onto the x-y-plane. The z-component of the normal vector may, in principle, be selected arbitrarily. It is convenient however to select the z-component such that the three-dimensional normal vector is normalized to unit length so that three-dimensional normal vector represents the actual inclination of the surface of the object.

The segmentation process may involve morphological opening and closing techniques which will automatically assure that the glossy regions have the required minimum size.

In a simple case, the point set in the x-y-plane may be segmented into regions which are either glossy or mat. In more elaborated embodiments, however, it is possible to apply similarity criteria which specify more than two different gloss values.

The surface treatments that are applied in the print process for reducing the gloss differences may for example comprise applying (printing) a layer of transparent ink on the rough surface regions in order to increase the gloss. Conversely, isolated bumps or ridges of transparent ink may be printed on glossy surface areas. This will reduce the gloss because the light is diffracted irregularly at the bumps or ridges.

Other types of surface treatment may comprise accelerating or intensifying the curing of the ink in order to decrease the gloss or, conversely, delaying or reducing the intensity of curing in order to permit the ink droplets to coalesce and hence to increase the gloss. For example, in case of ink jet printing with UV-curable ink, the surface treatment may comprise controlling the intensity and/or on and off state of the curing lamps.

### BRIEF DESCRIPTION OF THE DRAWINGS

Embodiment examples will now be described in conjunction with the drawings, wherein:
- Fig. 1: is a schematic view of an ink jet print head and a three-dimensional object printed thereby;
- Fig. 2: illustrates specular and diffuse reflection of light at the surface of the printed object;
- Fig. 3: shows a (one-dimensional) height map and normal vectors as determined by the height map;
- Fig. 4: shows schematically a normal map of the printed object shown in Figs. 1 and 2;
- Fig. 5: shows a zenith angle map of the printed object;
- Fig. 6: shows the result of a segmentation process applied to the zenith angle map shown in Fig. 5;
- Figs. 7 to 10: illustrate a segmentation process for a part of the normal map shown in Fig. 4;
- Figs. 11 and 12: are enlarged sectional views of parts of a printed object for illustrating different surface treatment techniques; and
- Fig. 13: is a flow diagram showing the essential steps of a method according to the invention.

### DETAILED DESCRIPTION OF EMBODIMENTS

The present invention will now be described with reference to the accompanying drawings, wherein the same or similar elements are identified with the same reference numeral.

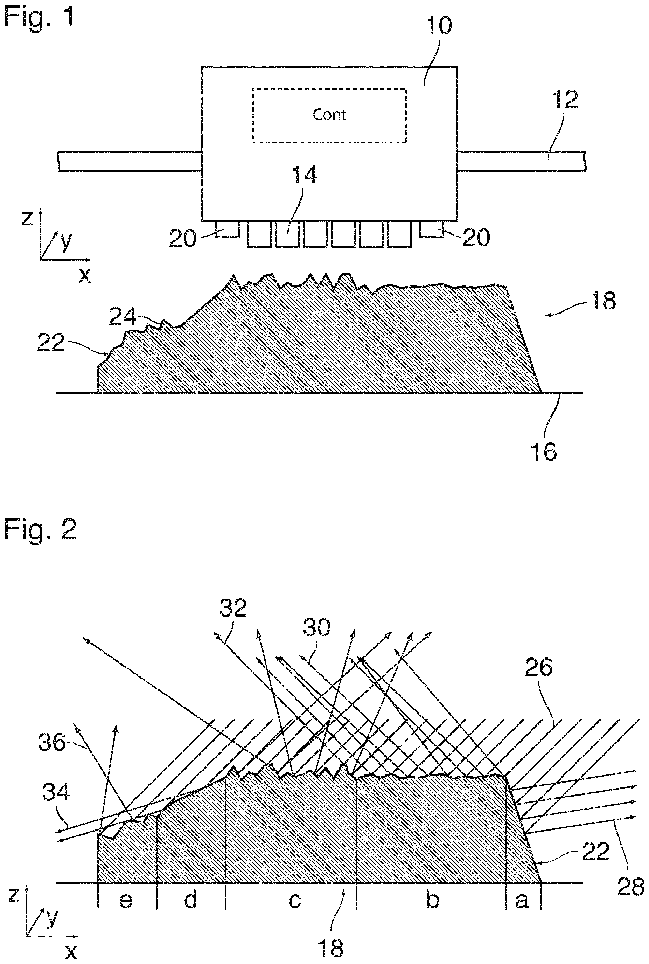

As is shown in Fig. 1, a carriage 10 of an ink jet printer is movable in a main scanning direction x along a guide rail 12 and carries on its bottom side a number of print heads 14 arranged to eject droplets of curable ink downwardly towards a print substrate 16 in order to print a three-dimensional object 18 by superposing a plurality of layers of ink. In the example shown, the carriage 10 has six print heads for printing with UV-curable ink in the colors cyan, magenta, blue, black and white. A sixth print head is provided for printing with transparent ink. A curing lamp 20 is provided at either end of the row of print heads 14 for curing each freshly deposited layer of ink by irradiating it with UV light. The printer is controlled by an electronic controller Cont in which a software for performing the method according to the invention is loaded.

The height of the object 18 in a height direction z normal to the main scanning direction x is controlled by controlling the number of ink layers that are superposed at each x-position.

In the example shown, a surface 22 of the object 18 on the top side and the lateral sides is formed by a mosaic of flat facets 24 which differ in size and in their orientation in space. Since Fig. 1 shows only a two-dimensional section of the object 18, the facets 24 appear as straight lines.

Fig. 2 shows the same sectional view of the object 18 as Fig. 1 and further shows a bundle of parallel light rays 26 which are incident upon the surface 22 and are reflected at that surface in directions that are determined by the inclination of the facets 24 at the respective points of incidence. The rays 26 may be considered to originate from a bright illumination lamp disposed at such a large distance from the object 18 that the rays 26 are practically parallel.

As is further shown in Fig. 2, the surface 22, at least in the sectional plane shown in Fig. 2, may be divided into different regions a-e which have different reflection and gloss properties. In the region "a", the surface 22 is flat and forms a relatively steep slope. The rays 26 incident in this region are all reflected in the same direction as is indicated by parallel arrows 28 with black arrow heads. Thus, in this region "a", the surface 22 is glossy and causes specular reflections.

In the region b, the surface 22 is composed of a large number of small facets which, however, have all a very low inclination, so that the surface in the region b, as a whole, is practically horizontal. The rays 26 incident on that surface are reflected not exactly in the same direction but in very similar directions, as is indicated by arrows 30 with black arrow heads. Since the arrows 30 are almost parallel to each other, the surface in the region b will also be perceived as glossy.

In the neighboring region c, the surface 22 as a whole is also horizontal, but the relatively small facets have larger inclinations. As a consequence, the rays 26 incident in this region are diffusely reflected in different directions as has been indicated by arrows 32 with white arrow heads. In this region, the surface will have a matt appearance, i.e. a low gloss.

In the region d, the surface as a whole is inclined, but all the facets in that region have essentially the same inclination, so that all rays 26 are reflected in the same direction, as is indicated by arrows 34 with black arrow heads. The surface in this region will therefore appear glossy.

Finally, in the region e, the surface as a whole is inclined, but the individual facets have inclinations that significantly differ from one another, so that the incident light is again diffusely reflected, as has been indicated by arrows 36 with white arrow heads. In this region, the surface will have a matt appearance, i.e. a low gloss.

It will be understood that the object 18 and also its surface regions a-e are extended also in a direction y normal to the plane of the drawings in Figs. 1 and 2. The guide rail 12 shown in Fig. 1 is therefore movable also in the direction y which is called the sub-scanning direction.

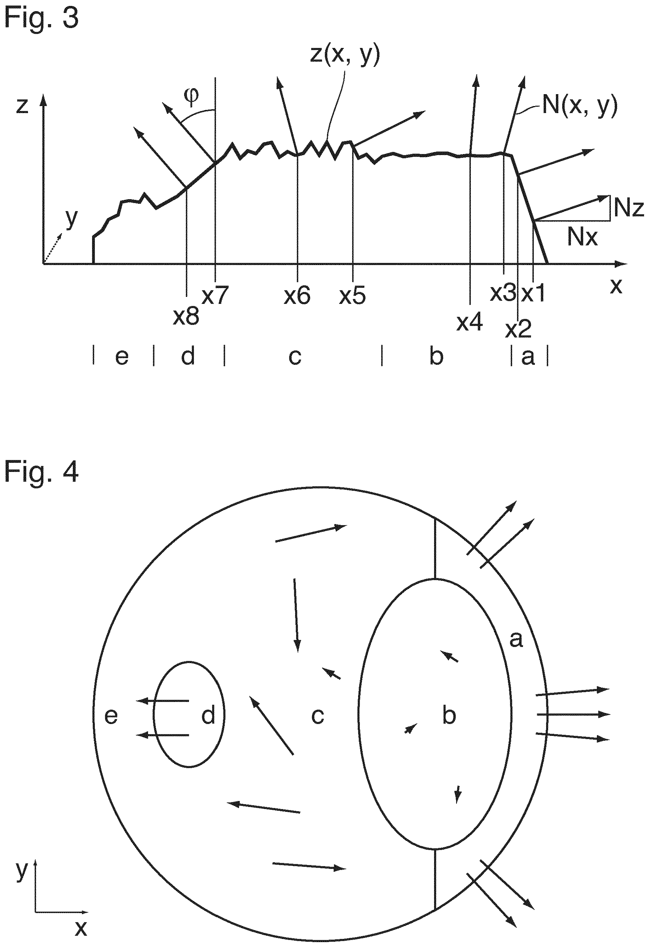

Fig. 3 shows a height map z(x, y) which indicates, for each point in the x-y-plane, the height of the surface of the object. What is shown in Fig. 3 is only the part of the height map with a constant y-value that represents the sectional plane in Figs. 1 and 2.

This height map can be used for calculating, for each point in the x-y-plane, a normal vector N(x, y) which is a unit vector (length units are arbitrary) pointing in the direction normal to the surface 22 at that point. The x-component of the normal vector may be calculated by partial differentiation of the height map z(x, y) in the x-direction, and the y-component of the normal vector can be obtained by partial differentiation of z(x, y) in the y-direction. The z-component of the normal vector may then be scaled such that the normal vector has unit length.

Fig. 3 shows examples of normal vectors N(x, y) for a number of selected points x1-x8 on the x-axis. It can be seen that the normal vectors at the points x1 and x2 in the region "a" are identical, the normal vectors at the points x3 and x4 in the region b are almost identical, just as the normal vectors at the points x7 and x8 in the region d, whereas the normal vectors at the points x5 and x6 in the matt region c greatly differ from one another. Thus, the normal vectors N(x, y) can be used for classifying the regions a-e.

A first classification scheme may distinguish only between horizontal regions and non-horizontal regions. In that case, it is sufficient to consider the zenith angles ϕ which the normal vectors form with the vertical direction (z).

Fig. 4 shows the shape of the regions a-e in the x-y-plane. It turns out that the regions c and e are actually contiguous.

For some of the points in the x-y-plane, Fig. 4 shows also the projections of the normal vectors onto the x-y-plane. The length of this projection is the sine of the zenith angle ϕ. Thus, short vectors in Fig. 4 indicate small zenith angles and consequently an essentially horizontal surface, whereas long vectors in Fig. 4 indicate large zenith angles and consequently a steeper slope of the surface.

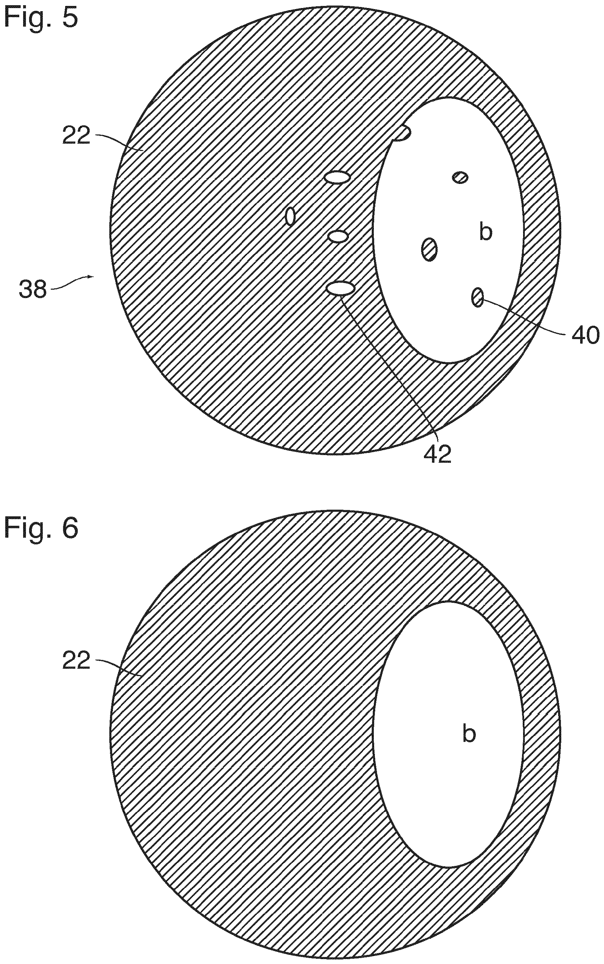

The pattern shown in Fig. 4 may therefore be considered as a zenith angle map indicating the zenith angle ϕ (x, y) for each point in the x-y-plane. In order to distinguish between horizontal and non-horizontal regions, this zenith angle map may be thresholded with a suitable threshold value so as to obtain a binary zenith angle map 38 as shown in Fig. 5. The almost horizontal region b can be recognized, but it still contains some islands 40 where the zenith angle happens to be larger than the threshold value. Conversely, all the rest of the surface 22 is basically classified as non-horizontal but still includes some almost horizontal spots 42.

In order for a horizontal surface region to be perceived as glossy or mat, it is required that the region has a certain minimum size (e.g. 0.5 mm) in both the x-direction and the y-direction. In the example shown in Fig. 5, the islands 40 and the spots 42 are below this minimum size and should therefore be eliminated. In practice, this can be achieved by applying a morphological opening and closing algorithm, as is well known in the art. The result is shown in Fig. 6, where the surface 22 of the object is segmented into the horizontal region b and all the rest which is non-horizontal.

Fig. 6 may be considered as a gloss correction map which determines where a surface treatment should be applied in order to equalize the gloss in the two regions.

In practice, it may in many cases not be sufficient to identify just horizontal glossy regions, because other regions, such as the regions a and d in Figs. 2 and 4 which are inclined but not very rough, may also have an undesired gloss.

In order to be able to identify such regions, the simple classification scheme that has been described above, based on the zenith angle, may be extended to a scheme that includes more classes for the normal vectors N(x, y). For example, it is possible to define a number n = 5 of classes of normal vectors, in which each class is represented by a different standard normal vector. In this example, the five standard normal vectors may be considered as the normal vectors of the five faces of a four-sided truncated pyramid. Then, each normal vector N(x, y) would be classified in the class belonging to the standard normal vector with which it has the highest similarity (i.e. the difference between the normal vector and the standard normal vector is smallest). This will result in a normal vector map with regions which each belong to one of five classes, one of the classes representing horizontal regions and the other four classes representing inclined regions with different orientations. Then, again, a segmentation process such as morphological opening and closing may be applied in order to eliminate islands and to join closely adjacent regions which belong to the same class.

Of course, this scheme may be extended by increasing the number n of classes as desired. However, these schemes would only help to identify regions such as the region d which have an essentially uniform gradient. It would however not help for identifying the region "a" in Fig. 4, for example, where the normal vectors (and also their projections on x-y-plane) point into substantially different directions, so that different sub-regions of the region "a" would be classified in different classes. These sub-regions of the region "a" could still be recognized as glossy regions, provided that their size is still large enough. However, if the classification leads to a subdivision of the region "a" into ever smaller sub-regions (which will happen when the number n is increased), the region "a" will no longer be identified as a set of glossy sub-regions but will erroneously be classified as one rough, non-glossy region.

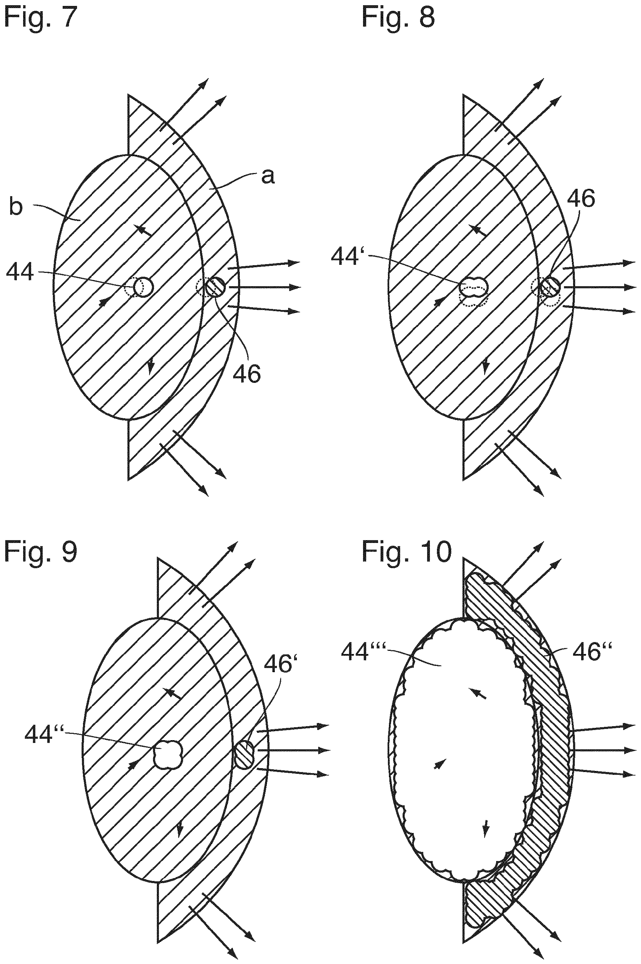

It may therefore be appropriate to apply a similarity criterion that does not simply require that all normal vectors are similar to the same standard normal vector, but instead requires only that the variation of the normal vectors is slow when the coordinates x and y are varied. An example of such a scheme is shown in Figs. 7 to 10.

Fig. 7 shows the regions "a" and "b" which, however, have not yet been classified. The classification starts by arbitrarily selecting certain start points that are scattered over the x-y-plane, and by considering an environment 44, 46 (e.g. a circle with a diameter of 0.5 mm) around each start point. Then it is checked for each environment 44, 46 whether the largest difference between two normal vectors in this environment is smaller than a threshold value. If this is the case, the environment becomes the nucleus of a glossy region. If the criterion is not fulfilled, the start point is randomly shifted in the x-y-plane and the process is repeated. In the example shown in Fig. 7, the environment 44 is classified as horizontal, and the environment 46 is classified as a slope.

Then, the environments are shifted as has been indicated by dotted lines in Fig. 7, and it is checked whether the similarity criterion is also fulfilled for the shifted environments. If yes, the old and the new environment are united; if not, the new environment is discarded. The result of this first shift operation is shown in Fig. 8, where a larger horizontal environment 44' has been formed whereas the environment 46 has remained the same.

Then, the shifting operation is repeated, possibly in a different direction, as has been indicated by dotted lines in Fig. 8, and the similarity criterion is applied once again in order to either enlarge the environment or leave it as it is. In this way, as is shown in Fig. 9, a larger horizontal environment 44" is created, and the environment 46 has now also been enlarged successfully to become a new environment 46'.

This process is iterated until an enlarged environment 44'" exhausts almost the entire region "b" and an enlarged environment 46" exhausts almost the entire region "a". Then, morphological opening and closing or other techniques may be applied for closing the gaps and regularizing the borders.

It is possible that, in the initial step shown in Fig. 7, two or more start points are selected within the same region. In that case, the enlarged environments growing from these start points will "collide" at some point and will then be merged.

Once the glossy and non-glossy regions of the surface 22 have been identified (i. e. the gloss correction map has been established), the object 18 is printed and a surface treatment is applied for equalizing the gloss.

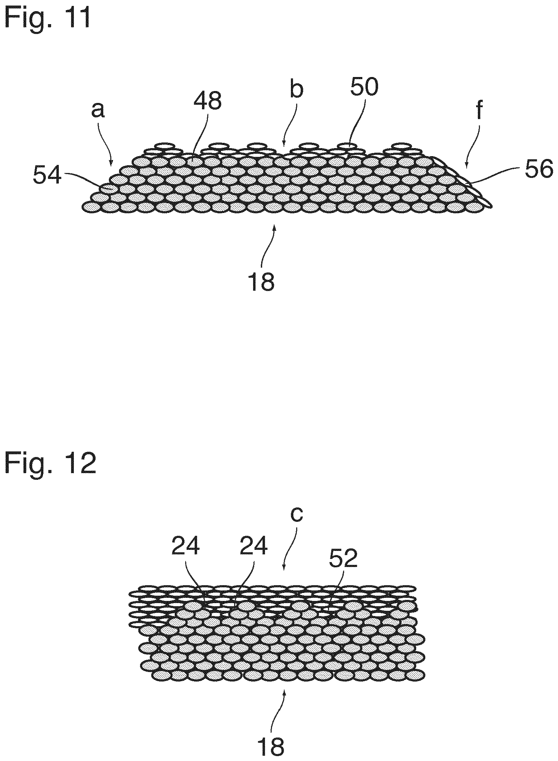

Fig. 11 shows an example of a surface treatment operation which is applied to the glossy horizontal region "b" in order to reduce the gloss. To that end, when a top layer 48 of colored (or black or white) ink has been formed, a pattern of finely distributed bumps 50 or ridges is formed on the layer 48 with transparent ink. This has the effect that light beams incident upon and reflected at the layer 48 will be refracted by the transparent ink of the bump 50 and will therefore be reflected diffusely in different directions, so that the gloss value of the region "b" is reduced.

Conversely, Fig. 12 shows an example of a surface treatment for increasing the gloss of the rough horizontal region "c". In that case, the colored ink forms a rough surface with small-sized facets 24 which have different orientations, so that notches 52 are formed between the facets. These notches 52 are filled up with transparent ink so as to create a smooth surface with increased gloss.

In many cases it will be sufficient to distinguish just between glossy and non-glossy surface regions, so that the gloss correction may be achieved by either applying or not applying a surface treatment.

It is possible however to distinguish between different grades of gloss, for example by applying different thresholds in the assessment of similarity between the normal vectors. Then, the intensity of the surface treatment may be adapted in accordance with the differences between the grades of gloss.

Gloss differences may also be caused by the inclination of the surface. For example, while the top layer 48 of the colored ink in Fig. 11 forms a relatively smooth surface, a surface layer 54 in the sloping region "a" resembles more a staircase, due to the finite thickness of the individual ink layers. This may result in gloss differences between the regions "a" and "b" although both regions are regarded as smooth. Fig. 11 further shows a region "f" where the gloss of the sloped surface has been increased by applying a layer 56 of transparent ink.

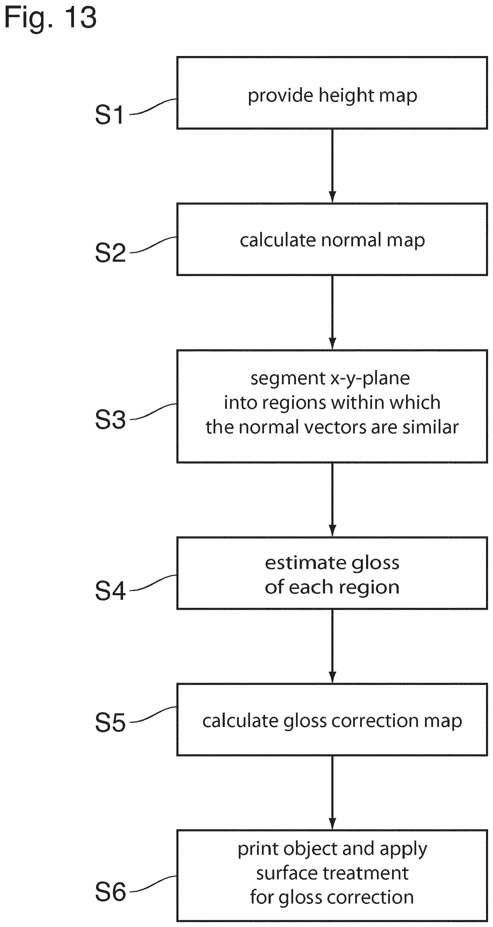

The essential steps of a method according to the invention have been summarized in Fig. 13.

In step S1, a height map is provided that defines the shape of the body 18 to be printed. This height map may for example be obtained by scanning a real object in order to make a replica of that object. On the other hand, when the object to be printed has been designed on a computer, the height map can readily be obtained from the computer-generated model of the object.
In step S2, a normal map is calculated on the basis of the height map. The normal map may be a binary map distinguishing only between two types of normal vectors (vertical and not-vertical) or may be a multi-valued map distinguishing between different classes of normal vectors.
In step S3, the x-y-plane, or rather the area that is covered by the object to be printed, is segmented into regions in which the normal vectors are similar in the sense that they fulfill one of the similarity criteria that have been described earlier.
In step S4, a gloss value is estimated for each of the regions that have been identified in step S3. This step is trivial when the distinction is made only between two gloss values (glossy or not glossy).

Step S5 is a step of calculating a gloss correction map which assigns a necessary amount of gloss correction to each of the regions. In a typical example, it will be the purpose of the gloss correction map to equalize the gloss on the surface of the printed object. The gloss correction map may however be calculated on the basis of other criteria when specific gloss effects are desired.
Finally, in step S6, the object 18 is printed and the surface treatment is applied as specified in step S5.

## Claims

1. A method of gloss correction in a process of printing a three-dimensional object (18), wherein a print head (14) is moved in a main scanning direction x and a sub-scanning direction y relative to a print substrate (16), **characterized by** the steps of:
a) providing a height map z(x, y) which defines the object (18) to be printed by assigning to each point in a set of points in an x-y-plane that is spanned by the main scanning direction x and the sub-scanning direction y a height value z(x, y) of a surface (22) of the object;
b) deriving, from the height map, a normal map which assigns to each point in the set a normal vector N(x, y) that is normal to the surface (22) of the object at that point;
c) segmenting the set of points into at least two regions (a-e) in which the normal vectors of all points in the region fulfill a predefined similarity criterion that is related to a surface gloss of the object (18);
d) for each region, estimating an expected surface gloss value of the object;
e) calculating a gloss correction map on the basis of a difference between the estimated surface gloss values for said at least two regions; and
f) while printing the object (18), applying to the object a surface treatment in accordance with the gloss correction map.

2. The method according to claim 1, wherein said at least two regions (a-e) comprise regions of at least two different classes, one class being a class of regions which have a size larger than a predetermined minimum size and for which the similarity criterion is that the normal vectors N(x, y) deviate from the vertical by not more than a given threshold value.

3. The method according to claim 1 or 2, wherein said at least two regions comprise regions of more than two classes, each class being **characterized by** a given standard normal vector, and the similarity criteria for these regions are that the normal vector at all points in the region deviates from the corresponding standard normal vector by not more than a given threshold.

4. The method according to any of the preceding claims, wherein said at least two regions comprise at least one region of a class for which the similarity criterion is that the partial derivatives of the normal vector N(x, y) in the direction x and in the direction (y) at all points within the region are smaller than a given threshold value.

5. The method according to any of the preceding claims, wherein the step of segmenting comprises applying at least one of a morphological opening operation and a morphological closing operation.

6. The method according to any of the preceding claims, wherein the surface treatment comprises a step of applying transparent ink on a smooth surface such that the transparent ink forms a rougher surface.

7. The method according to any of the preceding claims, wherein the surface treatment comprises a step of applying transparent ink on a rough surface such that the transparent ink forms a smoother surface.

8. The method according to any of the claims 1 to 5, for a print process with radiation curable ink, wherein the surface treatment comprises a step of controlling a radiation source (20) for curing the ink.

9. A printer for printing three-dimensional objects (18), the printer comprising a print head (14) arranged to be moved in a main scanning direction x and a sub-scanning direction y relative to a print substrate (16), and an electronic controller (Cont), **characterized in that** the controller (Cont) is configured to perform the method according to any of the claims 1 to 8.

10. A software product comprising program code on a machine-readable medium, wherein the program code, when loaded into a controller (Cont) of a printer for printing three-dimensional objects (18), causes the controller to perform the method according to any of the claims 1 to 8.

## Patentansprüche

1. Verfahren zur Glanzkorrektur in einem Prozess des Druckens eines dreidimensionalen Objekts (18), bei dem ein Druckkopf (14) in einer Hauptabtastrichtung x und einer Unterabtastrichtung y relativ zu einem Drucksubstrat (16) bewegt wird, **gekennzeichnet durch** die folgenden Schritte:
a) bereitstellen einer Höhenkarte z(x, y), die das zu druckende Objekt (18) definiert, indem sie jedem Punkt in einer Menge von Punkten in einer x-y-Ebene, die durch die Hauptabtastrichtung x und die Unterabtastrichtung y aufgespannt wird, einen Höhenwert z(x, y) einer Oberfläche (22) des Objekts zuordnet,
b) herleiten, aus der Höhenkarte, einer Normalenkarte, die jedem Punkt in der Menge einen Normalenvektor N(x, y) zuordnet, der zu der Oberfläche (22) des Objekts an diesem Punkt normal ist,
c) segmentieren der Menge von Punkten in wenigstens zwei Regionen (a - e), in welchen die Normalenvektoren aller Punkte in der Region ein vordefiniertes Ähnlichkeitskriterium erfüllen, das sich auf einen Oberflächenglanz des Objekts (18) bezieht,
d) für jede Region, schätzen eines erwarteten Oberflächenglanzwertes des Objekts,
e) berechnen einer Glanzkorrekturkarte auf der Grundlage einer Differenz zwischen den geschätzten Oberflächenglanzwerten für diese wenigstens zwei Regionen, und
f) während des Druckens des Objekts (18), anwenden einer Oberflächenbehandlung in Übereinstimmung mit der Glanzkorrekturkarte auf das Objekt.

2. Verfahren nach Anspruch 1, bei dem die wenigstens zwei Regionen (a - e) Regionen aus wenigstens zwei unterschiedlichen Klassen umfassen, wobei eine Klasse eine Klasse von Regionen ist, die eine Größe haben, die größer ist als eine vorbestimmte Mindestgröße, und für welche das Ähnlichkeitskriterium darin besteht, dass die Normalenvektoren N(x, y) um nicht mehr als einen vorgegebenen Schwellenwert von der Vertikalen abweichen.

3. Verfahren nach Anspruch 1 oder 2, bei dem die wenigstens zwei Regionen Regionen aus mehr als zwei Klasen umfassen, wobei jede Klasse **gekennzeichnet ist durch** einen gegebenen Standard-Normalenvektor, und das Ähnlichkeitskriterium für diese Regionen darin besteht, dass der Normalenvektor an allen Punkten in der Region von dem entsprechenden Standard-Normalenvektor um nicht mehr als einen vorgegebenen Schwellenwert abweicht.

4. Verfahren nach einem der vorstehenden Ansprüche, bei dem die wenigstens zwei Regionen wenigstens eine Region aus einer Klasse umfassen, für welche das Ähnlichkeitskriterium darin besteht, dass die partiellen Ableitungen des Normalenvektors N(x, y) in der Richtung x und in der Richtung y an allen Punkten der Region kleiner sind als ein gegebener Schwellenwert.

5. Verfahren nach einem der vorstehenden Ansprüche, bei dem der Schritt des Segmentierens die Anwendung einer morphologischen Öffhungsoperation und/oder einer morphologischen Schließoperation einschließt.

6. Verfahren nach einem der vorstehenden Ansprüche, bei dem die Oberflächenbehandlung einen Schritt des Aufbringens von transparenter Tinte auf eine glatte Oberfläche einschließt, derart, dass die transparente Tinte eine rauere Oberfläche bildet.

7. Verfahren nach einem der vorstehenden Ansprüche, bei dem die Oberflächenbehandlung einen Schritt des Aufbringens von transparenter Tinte auf eine raue Oberfläche einschließt, derart, dass die transparente Tinte eine glattere Oberfläche bildet.

8. Verfahren nach einem der Ansprüche 1 bis 5, für einen Druckprozess mit durch Strahlung aushärtbarer Tinte, bei dem die Oberflächenbehandlung einen Schritt der Steuerung einer Strahlungsquelle (20) zum Aushärten der Tinte einschließt.

9. Drucker zum Drucken dreidimensionaler Objekte (18), der einen Druckkopf (14), der dazu angeordnet ist, in einer Hauptabtastrichtung x und einer Unterabtastrichtung y relativ zu einem Drucksubstrat (16) bewegt zu werden, sowie eine elektronische Steuerung (Cont) aufweist, **dadurch gekennzeichnet, dass** die Steuerung (Cont) dazu konfiguriert ist, das Verfahren nach einem der Ansprüche 1 bis 8 auszuführen.

10. Softwareprodukt mit Programmcode auf einem maschinenlesbaren Medium, bei dem der Programmcode, wenn er in eine Steuerung (Cont) eines Druckers zum Drucken von dreidimensionalen Objekten (18) geladen ist, die Steuerung veranlasst, das Verfahren nach einem der Ansprüche 1 bis 8 auszuführen.

## Revendications

1. Procédé de correction de brillance dans un processus d'impression d'un objet tridimensionnel (18), dans lequel une tête d'impression (14) est déplacée dans une direction de balayage principale x et une direction de balayage secondaire y par rapport à un substrat d'impression (16), **caractérisé par** les étapes de :
a) fourniture d'une carte de hauteur z(x, y) qui définit l'objet (18) à imprimer en affectant à chaque point dans un ensemble de points dans un plan x-y qui est couvert par la direction de balayage principale x et la direction de balayage secondaire y une valeur de hauteur z(x, y) d'une surface (22) de l'objet ;
b) calcul, à partir de la carte de hauteur, d'une carte normale qui affecte à chaque point dans l'ensemble un vecteur normal N(x, y) qui est normal à la surface (22) de l'objet à ce point ;
c) segmentation de l'ensemble de points en au moins deux régions (a-e) dans lesquelles les vecteurs normaux de tous les points dans la région remplissent un critère de similarité prédéfini qui est lié à une brillance de surface de l'objet (18) ;
d) pour chaque région, estimation d'une valeur de brillance de surface attendue de l'objet ;
e) calcul d'une carte de correction de brillance sur la base d'une différence entre les valeurs de brillance de surface estimées pour lesdites au moins deux régions ; et
f) pendant l'impression de l'objet (18), application à l'objet d'un traitement de surface en fonction de la carte de correction de brillance.

2. Procédé selon la revendication 1, dans lequel au moins deux régions (a-e) comprennent des régions d'au moins deux classes différentes, une classe étant une classe de régions qui ont une dimension supérieure à une dimension minimale prédéterminée et pour lesquelles le critère de similarité est que les vecteurs normaux N(x, y) s'écartent de la verticale de pas plus d'une valeur seuil donnée.

3. Procédé selon la revendication 1 ou 2, dans lequel lesdites au moins deux régions comprennent des régions de plus de deux classes, chaque classe étant **caractérisée par** un vecteur normal standard donné, et les critères de similarité pour ces régions sont que le vecteur normal à tous les points dans la région s'écarte du vecteur normal standard correspondant de pas plus d'un seuil donné.

4. Procédé selon l'une quelconque des revendications précédentes, dans lequel lesdites au moins deux régions comprennent au moins une région d'une classe pour laquelle le critère de similarité est que les dérivées partielles du vecteur normal N(x, y) dans la direction x et dans la direction (y) à tous les points dans la région sont inférieures à une valeur seuil donnée.

5. Procédé selon l'une quelconque des revendications précédentes, dans lequel l'étape de segmentation comprend l'application d'au moins l'une d'une opération d'ouverture morphologique et d'une opération de fermeture morphologique.

6. Procédé selon l'une quelconque des revendications précédentes, dans lequel le traitement de surface comprend une étape d'application d'encre transparente sur une surface lisse de sorte que l'encre transparente forme une surface plus rugueuse.

7. Procédé selon l'une quelconque des revendications précédentes, dans lequel le traitement de surface comprend une étape d'application d'encre transparente sur une surface rugueuse de sorte que l'encre transparente forme une surface plus lisse.

8. Procédé selon l'une quelconque des revendications 1 à 5, pour un processus d'impression avec une encre durcissable par exposition à un rayonnement, dans lequel le traitement de surface comprend une étape de commande d'une source de rayonnement (20) pour durcir l'encre.

9. Imprimante pour imprimer des objets tridimensionnels (18), l'imprimante comprenant une tête d'impression (14) agencée pour se déplacer dans une direction de balayage principale x et une direction de balayage secondaire y par rapport à un substrat d'impression (16), et un dispositif de commande électronique (Cont), **caractérisée en ce que** le dispositif de commande (Cont) est configuré pour réaliser le procédé selon l'une quelconque des revendications 1 à 8.

10. Produit logiciel comprenant un code de programme sur un support lisible par une machine, dans lequel le code de programme, lorsqu'il est chargé dans un dispositif de commande (Cont) d'une imprimante pour imprimer des objets tridimensionnels (18), provoque la réalisation par le dispositif de commande du procédé selon l'une quelconque des revendications 1 à 8.
